# EUROPÄISCHE PATENTSCHRIFT

(11) **EP 1 606 041 B1**
(45) Veröffentlichungstag und Bekanntmachung des Hinweises auf die Patenterteilung: **23.04.2008**
(21) Anmeldenummer: 04722813.5
(22) Anmeldetag: 24.03.2004
(51) Int. Cl.: B01D 53/14, C10K 1/14, C01B 3/52

(54) **VERFAHREN ZUR SELEKTIVEN ENTFERNUNG VON SCHWEFELWASSERSTOFF UND CO 2 AUS ROHGAS**
METHOD FOR THE SELECTIVE REMOVAL OF HYDROGEN SULPHIDE AND CO 2 FROM CRUDE GAS
PROCEDE D ELIMINATION SELECTIVE DE SULFURE D HYDROGENE ET DE CO 2 DANS DES GAZ BRUTS

(30) Priorität: 26.03.2003 DE 10313438
(43) Veröffentlichungstag der Anmeldung: 21.12.2005
(73) Patentinhaber: Uhde GmbH, 44141 Dortmund (DE)
(72) Erfinder: MENZEL, Johannes, 45731 Waltrop (DE)
(74) Vertreter: Dabringhaus, Walter
(86) Internationale Anmeldenummer: PCT/EP2004/003085
(87) Internationale Veröffentlichungsnummer: WO 2004/085036

(56) Entgegenhaltungen:
- US-A- 4 997 630
- US-A- 5 137 550
- US-A- 5 820 837

## Beschreibung

Die Erfindung richtet sich auf ein Verfahren zur selektiven Entfernung von Schwefelwasserstoff, organischen Schwefelkomponenten und CO₂ aus Roh-Erdgas der im Oberbegriff des Anspruches 1 angegebenen Gattung, wie es beispielsweise in der US-5 820 837-A beschrieben ist.

Wertstoffhaltige Gase, wie beispielsweise Erdgas oder Synthesegas, enthalten u.a. säurebildende Verunreinigungen, wie CO₂, H₂S, COS, CS₂ und/oder Mercaptane sowie HCN, die wegen der weiteren Nutzung der Gase entfernt werden müsse. Gesetzliche Bestimmungen zwingen nicht nur zur Senkung des Schwefelausstoßes, sondern auch der CO₂-Anteile, die darüber hinaus den Heizwert absenken. Verunreinigungen können störende Katalysatorgifte darstellen, Korrosionen hervorrufen u. dgl. mehr. Um Schwefelwasserstoffe zu entfernen, kann man chemische Absorptionsmittel, wie Ethanolamin, Alkali-Salzlösungen u.a., einsetzen oder aber auch physikalische Absorptionsmittel, wie z.B. Selexol, Propylencarbonat, Methanol u.a., wobei durch physikalische Absorptionsmittel auch noch organische Schwefelkomponenten entfernt werden können.

Durch Wahl und Einsatz eines selektiven Absorptionsmittels läßt sich bereits eine recht gute Selektivität der Entfernung von Schwefelwasserstoff und organischen Schwefelverbindungen in bezug auf Kohlendioxid erzielen. Als selektiv wirkende Absorptionsmittel werden sowohl chemisch wirkende Absorptionsmittel, wie z.B. selektive Amine, als auch physikalische Absorptionsmittel, wie z.B. Selexol, Pursiol, Genosorb oder Morphysorb, genutzt. Diese Selektivität reicht jedoch nicht aus, wenn ein besonders ungünstiges Verhältnis von Schwefelwasserstoff und organischen Schwefelverbindungen zu Kohlendioxid im Einsatzgas zu einem Sauergas mit einem so geringen Gehalt an Schwefelkomponenten führt, daß das Sauergas nicht mehr in einer Claus-Anlage verarbeitet werden kann.

Die chemischen Absorptionsmittel und deren Einsatz werden beispielsweise in der US-4 112 051 (Sartori et al) beschrieben. Gegenüber diesen chemisch aktive Lösungsmittel einsetzenden Verfahren richtet sich die vorliegende Erfindung insbesondere auf chemisch nicht aktive Absorptionsmittel zum einen, um möglichst reines CO₂ als Wertstoff zu gewinnen, und zum anderen mit Sauergas bzw. Gas zum Einsatz in einem Claus-Prozeß mit den dort benötigten Qualitätsmerkmalen zu gewinnen. In der Regel wird das von der Absorptionsmittel-Regeneration kommende Sauergas in einer Claus-Anlage zu Schwefel weiterverarbeitet. Dabei wirkt sich das im Sauergas enthaltene Kohlendioxid nachteilig auf diesen Claus-Prozeß aus, da Kohlendioxid als Ballaststoff den Prozeßgasstrom in der Claus-Anlage erhöht, was eine entsprechende Erhöhung der Anlagekapazitäten nötig macht. Des weiteren läßt sich eine Claus-Anlage mit einem Sauergas, das weniger als 10 Vol.-% an H₂S enthält, technisch nicht mehr wirtschaftlich betreiben.

Um ein derartig "schwache" Sauergas in einer Claus-Anlage zu verarbeiten, sind daher zusätzliche Maßnahmen notwendig. In der Regel erfolgt die Aufkonzentration der Schwefelkomponenten dadurch, daß die im niedrig konzentrierten Sauergas enthaltenen Schwefelkomponenten mittels einer zweiten Absorptionskolonne nach eventuell zusätzlicher Verdichtung mit regenerierter Absorptionslösung noch einmal entfernt werden, wobei aufgrund der bereits besseren Verhältnisse von Schwefelwasserstoff und organischen Schwefelverbindungen in bezug auf Kohlendioxid im Sauergas aus der ersten Absorptionsstufe eine entsprechend höhere Konzentration von Schwefelkomponenten im Sauergas der zweiten Absorptionsstufe erzielt wird. Diese Vorgehensweise ist jedoch sehr energie- und investitionskostenaufwendig, da der gesamte Sauergasstrom aus der ersten Absorptionsstufe zuerst auf den notwendigen Absorptionsdruck gebracht werden muß.

Andere Möglichkeiten zur Behandlung von Sauergasen, die einen geringen Gehalt an Schwefelkomponenten aufweisen, wie die Schwefelgewinnung durch direkt-oxidative Prozesse oder die Erzeugung von Schwefelsäure etc., führen zu großen Prozeßgasmengenströmen und damit auch zu großen Prozeßanlagen.

In der Patentschrift US-5 240 476 (Hegarty) wird die Koabsorption im Zusammenhang mit der Brenngasreinigung in einem auf der Kohlevergasung basierenden, mit kombinierter Gas- und Dampfturbine arbeitenden Kraftwerk angesprochen. Zur Regeneration der beladenen Waschlösung wird diese nahezu auf Umgebungsdruck entspannt, wodurch ein erster Teil des durch Koabsorption ausgewaschenen CO₂ ausgast und in das Rohgas zurückgeführt wird. Das restliche CO₂ wird durch Ausstrippen der verbliebenen, noch teilbeladenen Waschlösung mit im wesentlichen stickstoffhaltigem Gas aus ihr entfernt. Danach wird sie in einem weiteren Schritt auf nahezu Umgebungsdruck entspannt. In einer mittels Sumpfaufkocher beheizten Abtriebskolonne wird der in ihr verbliebene Schwefelwasserstoff von ihr abgetrennt und als Rohstoff an eine Claus-Anlage abgegeben.

Bei dem in dieser Patentschrift US-5 240 476 (Hegarty) mitgeteilten Verfahren wird der in der Luftzerlegung anfallende Abfallstickstoff zur Abtrennung des CO₂ von der beladenen Waschlösung verwendet. Daher ist dieses Verfahren auf den Einsatz im nahen Umfeld einer mittels partieller Oxidation betriebenen Kohlevergasung beschränkt und daher ungeeignet für die Reinigung von rohem Erdgas analog für Synthesegas ohne N₂. Dazu wird das mit hohem apparativen Aufwand eingesetzte Rohgas in zwei Stufen in einzelnen, in Reihe geschalteten Absorptionskolonnen mit Lösung behandelt.

Zum hier einschlägigen technologischen Umfeld sei, soweit Patentliteratur betroffen ist, noch auf die EP-0 033 029-A1 bzw. die entsprechende US-4 242 108, die EP-1 004 344 bzw. die entsprechende DE-198 54 353-A1, die EP-0 520 316-A1, die US-4 498 911 mit einer großen Menge an CO₂ im Gas, verwiesen, um nur einige Beispiele zu nennen.

Ein weiteres gattungsgemäßes Verfahren ist aus der US-5 820 837-A oder der DE-32 22 382-C2 bekannt, bei dem das zu reinigende Gas zunächst durch einen ersten Absorber geführt und dann dort mit einem vollständig regenerierten Lösungmittel in Kontakt gebracht wird. Das beladene Lösungsmittel wird über einen Erhitzer einem Abflash-Kessel und die dort freigesetzten Gase einem zweiten Absorber zugeführt, wo sie wieder mit vollständig regeneriertem Lösungsmittel in Kontakt gebracht werden. Dabei wird allerdings nur ein Claus-Gas mit 33 Vol.-% H₂S erreicht, wie dies weiter unten noch näher dargestellt ist.

Aufgabe der Erfindung ist die Schaffung einer Lösung, mit der Schwefelwasserstoff und organische Schwefelverbindungen einerseits möglichst selektiv entfernbar sind, was zum einen zu einem geringen Kohlendioxidgehalt im Sauergas führt und zum anderen den Nachteil hohen apparativen Aufwandes zur CO₂-Abtrennung vermeidet.

Mit einem Verfahren der eingangs bezeichneten Art wird diese Aufgabe gemäß der Erfindung durch die kennzeichnenden Merkmale des Hauptanspruches gelöst.

Mit der erfindungsgemäßen Verfahrensweise werden eine Reihe von Vorteilen erreicht, z.B. die spezifizierungsgerechte Produktion eines Claus-Gases, ausgehend von den ungünstigen Verhältnissen von H₂S zu CO₂ im Feedgas sowie die zusätzliche Gewinnung von nahezu reinem CO₂ bei erhöhtem Druck.

Eine Wirkungsverbesserung besteht darin, daß nach der zweiten Absorptionsstufe eine Flashstufe vorgesehen ist, in welcher das beladene Absorbens aus der zweiten Absorptionsstufe entspannt wird und das frei werdende Flashgas, welches im wesentlichen CO₂ und Anteile an H₂S enthält, in eine mindestens indirekt der zweiten Absorberstufe zuführende Leitung und das Absorbens in die Desorptionstufe geleitet wird.

Weitere Vorteile und Merkmale der Erfindung ergeben sich aus den Unteransprüchen, wobei es besonders vorteilhaft sein kann, wenn das beladene Absorbens nach der zweiten Absorptionsstufe und vor dem Eintritt in die Desorptionsstufe erwärmt wird, wobei die Erwärmung im indirekten Wärmetausch mit dem von der Desorptionsstufe kommenden Absorbensstrom erfolgt.

Zur weiteren Abreicherung des noch in dem die zweite Absorptionskolonne verlassenden angereicherten Absorptionsmittels enthaltenen Kohlendioxids wird das Absorptionsmittel in einen Flashbehälter bei erniedrigtem Druck entspannt. Die entstehende Gasphase wird mittels eines Flashgaskompressors der zweiten Absorptionskolonne wieder zugeführt. Dabei kann in Ausgestaltung nach der Erfindung vorgesehen sein, daß direkt vor der zweiten Absorptionsstufe eine Flashstufe angeordnet ist, in welcher das aus der Kondensationsstufe kommende Absorbens entspannt wird und das frei werdende wertgas, welches im wesentlichen Kohlenwasserstoffe, H₂S und CO₂ enthält, in die erste Absorptionsstufe zurückgeführt wird.

Neben den weiteren, weiter unten angegebenen Vorteilen der Erfindung ist es erfindungsgemäß zweckmäßig, wenn die Absorption bei einem Betriebsdruck von 10 bis 150 bar erfolgt und/oder eine Temperaturerhöhung des vom Absorber kommenden, angereicherten Absorptionsmittels auf 50 bis 200°C vorgenommen wird.

Enthält der den Hochdruck-Flashbehälter verlassende Hauptstrom des Absorptionsmittels eine noch zu hohe Menge an Kohlendioxid, kann in weiterer Ausgestaltung der Erfindung vorgesehen sein, daß die den Hochdruck-Flashbehälter verlassende angereicherte Absorptionslösung in einem Niederdruckflash entspannt wird, wobei das Flashgas mittels eines gemeinsamen Verdichters der zweiten Absorptionskolonne zusammen mit dem Flashgas aus der Flashstufe zugeführt wird und wobei die den Niederdruckflash verlassende Absorptionslösung auf den Kopf der Desorptionskolonne geführt wird.

Die bei erniedrigtem Druck geflashten Absorptionsmittelströme des Haupt- und des Teilkreislaufes werden in der Desorptionskolonne entspannt, wo am Sumpf der Kolonne durch Strippen mittels Strippdampf oder Strippgas der nahezu sauergasfreie, regenerierte Absorptionsmittelstrom anfällt. Erfindungsgemäß wird dann am Kopf der Desorptionskolonne eine konzentrierte Sauergasfraktion mit dem gewünschten hohen Gehalt an Schwefelwasserstoff und organischen Schwefelverbindungen gewonnen. Der am Kopf der Desorptionskolonne austretende Sauergasstrom wird zur Absorptionsmittelrückgewinnung noch mittels eines Kondensators gekühlt.

Ebenso wird zur Absorptionsmittelrückgewinnung auch das Flashgas des Niederdruck-Flashbehälters durch einen Kühler gekühlt, bevor das Flashgas zum Flashgaskompressor geführt wird. Das am Kopf der zweiten Absorptionskolonne bei erhöhtem Druck gewonnene, nahezu reine Kohlendioxid kann entweder im Prozeß weiter verwendet werden oder als verkaufsfähiges Produkt gewonnen werden oder zum Zwecke der Re-Injektion in Erdgas und Erdölfelder aufgrund des bereits erhöhten Vordruckes genutzt werden. Das erhöhte Druckniveau kann mittels einer Expandermaschine zur Energierückgewinnung genutzt werden.

Gegenüber der weiter oben beschriebenen konventionellen Verfahrensweise, bei der die Aufkonzentration der Schwefelkomponenten mittels eines nachgeschalteten zweiten Absorptionskreislaufes erfolgt, wofür das wenig Schwefelwasserstoff und organische Schwefelverbindungen enthaltende Sauergas mittels eines Kompressors auf den notwendigen Absorptionsdruck gebracht werden muß, hat die hier beschriebene erfindungsgemäße Verfahrensweise den entscheidenden Vorteil, daß ein großer Teil des Sauergases durch Entspannen bei höherem Druck und erhöhter Temperatur bereits das für die Absorption mit physikalischen Absorptionsmitteln notwendige hohe Druckniveau besitzt und daher dieser Teilstrom nicht mehr komprimiert werden muß.

Mit der Absorption dieser Flashgase in der Nebenstromabsorption wird die Selektivität für Schwefelwasserstoff und organische Schwefelverbindungen in bezug auf Kohlendioxid bereits deutlich gesteigert und führt damit zu einer erhöhten Konzentration von Schwefelwasserstoff und organischen Schwefelverbindungen im Sauergas.

Weiter erhöhen läßt sich die Selektivität für Schwefelwasserstoff und organische Schwefelverbindungen in bezug auf Kohlendioxid mittels der Einbeziehung der weiteren Niederdruck-Flashstufen mit Verdichtung und Rückförderung zur zweiten Absorptionskolonne, so daß auch für Einsatzgase, die ein sehr ungünstiges Verhältnis von Schwefelwasserstoff und organischen Schwefelverbindungen zu Kohlendioxid von z.B. 1 : 40 aufweisen, eine Konzentration von Schwefelwasserstoff und organischen Schwefelverbindungen im Sauergas von größer 50 mol% mit dieser vorteilhaften Verfahrensweise erzielt werden kann.

Die gewünschte Konzentration der Schwefelkomponenten im Sauergas läßt sich weiterhin über den Druck der Niederdruck-Flashstufe einstellen, wobei für die meisten Anwendungsfälle ein vorteilhafter Druck zwischen 3 bis 10 bar resultiert, was bei der Rückverdichtung der Niederdruck-Flashgase zu weiteren deutlichen Einsparungen an Betriebs- und Investitionskosten im Vergleich zu einer konventionellen zweistufigen Absorption führt.

Weitere Vorteile, Einzelheiten und Merkmale der Erfindung ergeben sich aufgrund der nachfolgenden Beschreibung sowie anhand der Zeichnung. Diese zeigt in
- Fig. 1: ein Anlagenschaltbild nach der Erfindung zur Durchführung des erfindungsgemäßen Verfahrens sowie in
- Fig. 2: ein konventionelles Anlagenschaltbild mit gleichen Bezugszeichen.

In dem Schaubild sind alle Leitungen und Prozeßströme mit den Ziffern 1 bis 30 bezeichnet, während alle eingesetzten Anlagenteile die Bezugsziffer 41 ff. tragen.

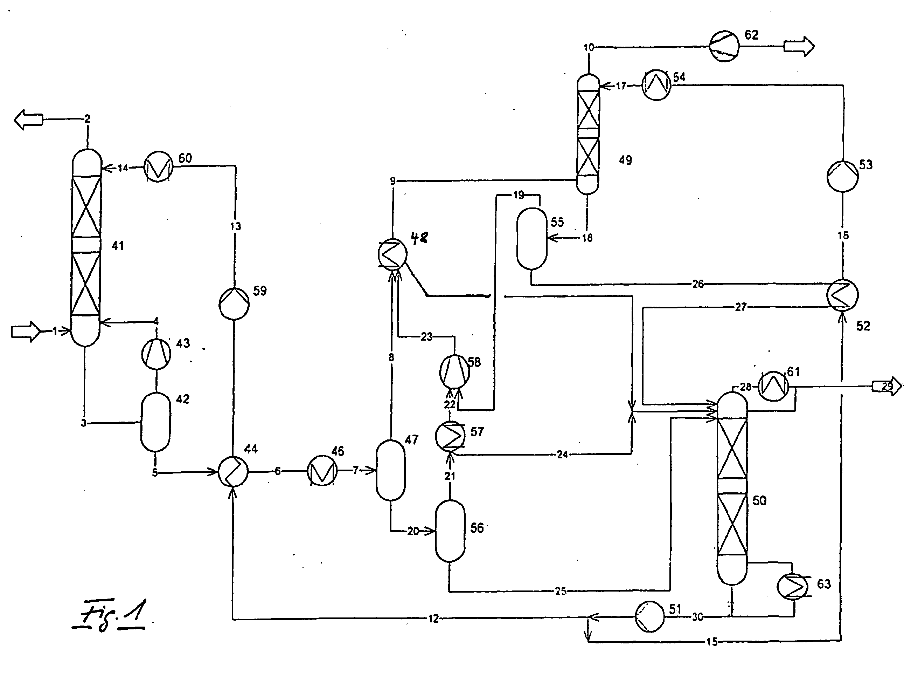

Die in Fig. 1 dargestellte Anlage weist zunächst eine erste mit 41 bezeichnete Absorptionskolonne, im Schaltbild links dargestellt, auf, die mit dem Erd- bzw. Synthesegas über die Leitung 1 beschickt wird, das die Absorptionskolonne von unten nach oben durchströmt und oben über die Leitung 2 als gereinigtes Gas verläßt. Dabei wird das Feedgas 1 zum Sumpf der Absorptionskolonne 41 geführt. Die im Gas enthaltenen Sauergaskomponenten werden im Gegenstrom von der im Kopf der Absorptionskolonne 41 aufgegebenen regenerierten Lösung 14 entfernt, wobei die in der Absorptionskolonne 41 enthaltenen Stoffaustauschelemente für die notwendige Stoffübertragung sorgen.

Das aus dem Sumpf der Absorptionskolonne 41 abgezogene, mit Sauergas beladene Absorptionsmittel (Leitung 3) wird einem Recyclegas-Flashbehälter 42 zugeführt und dort entspannt und im Kreislauf über einen Recyclegas-Verdichter 43 und die Leitung 4 in den Sumpf der Absorptionskolonne 41 zurückgeführt, insbesondere dann, wenn die im Absorptionsmittel gelösten Gaswertstoffe, wie Kohlenwasserstoff, Wasserstoff oder Kohlenmonoxid, zurückgewonnen werden stollen.

In der weiteren Prozeßführung wird die den Recyclegas-Flashbehälter 42 verlassende Lösung über die Leitung 5 einem ersten Wärmetauscher 44 zugeführt und dort vorgewärmt, dann über die Leitung 6 einem weiteren Wärmetauscher 46 zur weiteren Erwärmung zugeführt und von dort zu einem Hochdruck-Flashbehälter 47 geleitet. Die im Hochdruckflash freiwerdende Gasphase wird über die Leitung 8 zu einem Kühler 48 geleitet, während das anfallende Kondensat über Leitungen 11, 24 der im Prozeß vorgesehenen Desorptionskolonne 50 zugeleitet wird, wobei hier zur Erhöhung der Selektivität für Schwefelwasserstoff und organische Schwefelverbindungen neben dem Hochdruck-Flashbehälter 47 ein Niederdruck-Flashbehälter 56 im Leitungsweg 20, 25 eingebaut ist.

Das den Kühler 48 verlassende Flashgas aus den Leitungen 9 und 23 wird dem Sumpf einer zweiten Absorptionskolonne 49 zugeführt. Im Gegenstrom wird dem Kopf der zweiten Absorptionskolonne 49 über die Leitung 15, 16, 17 als Teilstrom regeneriertes Absorptionsmittel zugeführt, das vom Sumpf der Desorptionskolonne 50 über Wärmetauscher 52 und 54 zugeleitet wird. Über die Leitung 10 verläßt die zweite Absorptionskolonne 49 am Kopf reines CO₂ als Wertstoff. Das dort in der Kolonne 49 anfallende angereicherte Absorptionsmittel wird über die Leitung 18 zur weiteren Erhöhung der Selektivität von Schwefelwasserstoff und organischen Schwefelverbindungen in einem Flashbehälter 55 entspannt, wobei das Absorptionsmittel als Teilstrom 26 über einen Wärmetauscher 52 und die Leitung 27 dem Kopf der Desorptionskolonne 50 zugeleitet wird.

Der zweite Teilstrom des den Desorber 50 verlassenden Absorptionsmittels wird über die Leitung 12 dem oben schon genannten ersten Wärmetauscher 44 des den Flashbehälter 42 verlassenden Lösungsmittelstromes zugeführt. Nach Durchgang durch den Wärmetauscher 44 wird das regenerierte Absorptionsmittel über die Leitungen 13, 14 durch den Kühler 60 gekühlt und dem Kopf der Absorptionskolonne 41 zugeführt.

Erkennbar wird mit der erfindungsgemäßen Verschaltung der unterschiedlichen Anlageteile das Ziel der Erfindung in besonders günstiger Weise erreicht, nämlich mittels Absorption entfernte Sauergaskomponenten, d.h. die Schwefelwasserstoffe und organischen Schwefelverbindungen möglichst effektiv aufzuarbeiten, um ein möglichst H₂S-reiches Claus-Gas zu erreichen, das bei mit Pfeil 29 bezeichnet das Anlagesystem verläßt, wobei gleichzeitig nahezu reines CO₂ als Wertstoff gewonnen wird. Dabei ist es möglich, wie dies die Erfindung vorsieht, das Absorptionsmittel bei einem erhöhten Druck mittels der von der Desorptionskolonne 50 kommenden heißen generierten Lösung 12 im Wärmetauscher 44 vorzuwärmen, wobei der Druckwert zwischen dem Druck der Absorptionskolonne 41 und dem Druck der Desorptionskolonne 50 eingestellt wird.

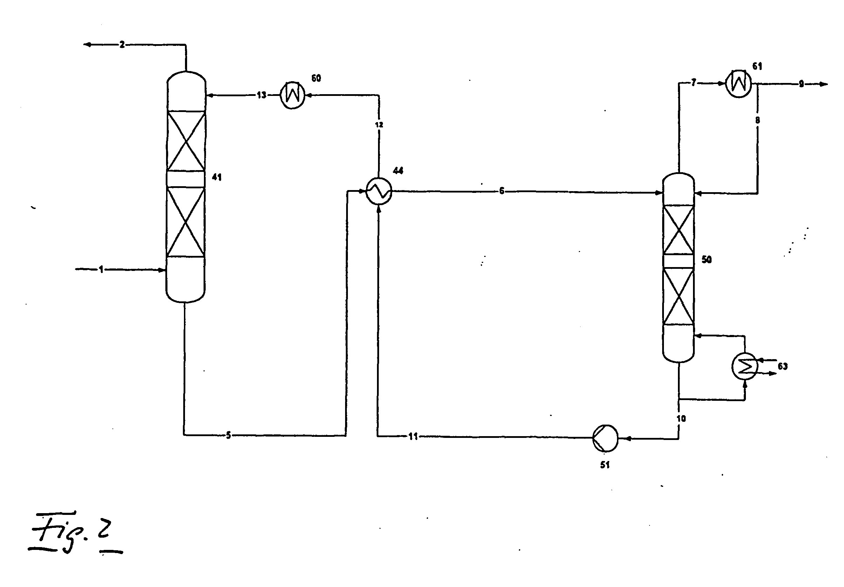

In Fig. 2 ist ein konventionelles Anlageschaltbild zur Vereinfachung der nachfolgenden Vergleiche wiedergegeben, wobei die gleichen Anlageteile die hier verwendeten Bezugszeichen tragen. Das hier beschriebene Beispiel enthält keine Recyclegas-Flashstufe 42 und ebenso keinen Recyclegas-Kompressor 43. Als Beispiel sei ein Gas mit einem Mengenstrom von 10000 kmol/h mit folgender Zusammensetzung angenommen:
CO₂ mit 201 kmol/h, H₂ mit 66 kmol/h, N₂ mit 15 kmol/h, CH₄ mit 29 kmol/h, CO₂ mit 3572 kmol/h, H₂S mit 100 kmol/h und 17,5 kmol/h Wasserdampf. Die sich für diese Beispiele ergebenden Ströme für die erfindungsgemäße Verfahrensweise sind in der nachfolgenden Tabelle 1 aufgeführt:

| | Gasmengenstrom | H₂S | CO₂ | Temp | Pres | Absorptionsmittelvolumenstrom |
|---|---|---|---|---|---|---|
| Strom-Nr. | kmol/h | kmol/h | kmol/h | °C | bar | m³/h |
| 1 | 100000.0 | 100.0 | 3571.7 | 40 | 61 | - |
| 2 | 9727.7 | 0.004 | 2805.7 | 0 | 60.2 | - |
| 8 | 695.0 | 49.3 | 617.3 | 140 | 40 | - |
| 19 | 274.5 | 64.1 | 209.9 | 21.6 | 4 | - |
| 21 | 184.7 | 31.0 | 131.9 | 129 | 4 | - |
| 9 | 1119.2 | 144.2 | 959.1 | 20 | 40 | - |
| 10 | 725.0 | 0.016 | 711.2 | 45 | 40 | - |
| 29 | 163.6 | 100.0 | 54.8 | 40 | 1.4 | - |
| | | | | | | |
| 5 | - | 100.0 | 766.0 | 7.7 | 60.4 | 202 |
| 12 | - | 0.0007 | 0.0 | 163.4 | 5 | 183 |
| 15 | - | 0.0007 | 0.0 | 163.4 | 5 | 63 |
| 11 | - | 50.8 | 148.8 | 139 | 40 | 197 |
| 25 | - | 19.7 | 16.8 | 129 | 4 | 179 |
| 26 | - | 80.1 | 37.4 | 22 | 4 | 61 |
| 18 | - | 144.1 | 247.3 | 47 | 40 | 86 |

Tabelle 2: Gerechnetes Gegenbeispiel einer typischen Absorber/Desorberschaltung gemäß Fig. 2.

| | Gasmengenstrom | H₂S | CO₂ | Temp | Pres | Absorptionsmittelvolumenstrom |
|---|---|---|---|---|---|---|
| Strom-Nr. | kmol/h | kmol/h | kmol/h | °C | bar | m³/h |
| 1 | 10000.0 | 100.0 | 3571.7 | 40 | 61 | - |
| 2 | 9129.3 | 0.0130 | 2829.8 | -1 | 60.2 | - |
| 9 | 870.7 | 100.0 | 741.9 | 12.6 | 1.4 | |
| | | | | | | - |
| 5 | - | 100.0 | 741.9 | 7.3 | 60.4 | 199 |
| 11 | - | 0.001 | 0.0 | 142.7 | 67 | 156 |

Wie sich aus der obigen Tabelle ergibt ist für ein Einsatzgas mit einem sehr ungünstigen H₂S- zu CO₂ -Verhältnis von 31 : 36 gleichwohl eine sehr gute Claus-Qualität von 60 Vol.-% H₂S zu erzielen, so daß das Claus-Gas mit einer einfachen Standard-Claus-Anlage weiterverarbeitet werden kann. Wie sich aus der Tabelle 2, die eine herkömmliche Verfahrensweise darstellt, ergibt, ist diese gute Qualität mit der erfindungsgemäßen verfahrensweise zu erzielen, obgleich das H₂S- zu CO₂-Verhältnis schlechter ist als im Beispiel nach dem Stand der Technik (hier 1 : 36, dort 1 : 26). Nach dem Stand der Technik gemäß Tabelle 2 wird außerdem nur ein Claus-Gas mit 33 Vol.-% H₂S erzielt, was dazu führt, daß die Claus-Anlage deutlich aufwendiger zu gestalten wäre, als nach der erfindungsgemäßen Verfahrensweise.

Würde ein Einsatzgas mit einem H₂S-Verhältnis von 1 : 36 eingesetzt, wie hier bei der Erfindung möglich, ergäbe dies nach dem Stand der Technik nur ein Claus-Gas von ca. 22 Vol.-%, was zu einer weiteren, deutlichen Vergrößerung der benötigten Claus-Anlage führen würde.

Zusammenfassend ist daher festzustellen, daß das Zusammenwirken der in den Ansprüchen genannten Elemente, wie Flashkessel 47, 56, zweite Absorptionskolonne 49 und in weiterer Ausgestaltung der Einsatz des Flashbehälters 55, eine überraschend hohe Selektivität ergibt, die zu einem Claus-Gas von ca. 60 Vol.-% H₂S führt.

Die Verwendung des Flashbehälters 55, der normalerweise in physikalischen Absorptionsprozessen als sogenannter Recyclegas-Flashbehälter zum Zwecke der Rückgewinnung von co-absorbierten Wertstoffkomponenten, wie Kohlenwasserstoffen bei der Erdgaswäsche, von CO bzw. H₂ bei der Synthesegaserzeugung, dient, bewirkt durch das Flashen des ablaufenden Stromes 18 eine deutliche Erhöhung der H₂S/CO₂-Selektivität.

In Fig. 1 sind alle Leitungen und Prozeßströme mit den Ziffern 1 bis 30 bezeichnet, alle Anlagenteile mit den Ziffern 41 ff. :
- 1: Synthesegas-Zuführleitung
- 2: Reingas-Ausleitung
- 3: Sumpfableitung aus Absorptionskolonne 41
- 4: Sumpfrückführleitung in Absorptionskolonne 41
- 5: Flashbehälter(42)-Ableitung
- 6: Wärmetauscher(46)-Zuführleitung
- 7: Wärmetauscher(46)-Ableitung
- 8: Hochdruckflashgas-Ableitung aus Hochdruckflash-Behälter 47
- 9: Absorptionskolonne(49)-Zuführleitung
- 10: Absorptionskolonne(49)-Zuführleitung
- 12: Wärmetaucher(44)-Zuführleitung
- 13: Absorptionsmittelleitung
- 14: Absorptionsmittelleitung zum Kopf der Absorptionskolonne 41
- 15: Teilstromleitung aus Desorptionsstufe 50 in Absorptionsstufe 49
- 16: Teilstromleitung aus Desorptionsstufe 50 in Absorptionsstufe 49
- 17: Teilstromleitung aus Desorptionsstufe 50 in Absorptionsstufe 49
- 18: Absorptionsstufen(49)-Abführleitung in Flashbehälters 55
- 19: Abführleitung aus Kopf des Flashbehälters 55
- 20: Hochdruckflashbehälter(47)-Abführleitung
- 21: Zuführleitung zum Niederdruckflash 56
- 22: Kopfablaufleitung aus Niederdruckflash 56
- 23: Zuführleitung zum Kühler 48
- 24: Zuführleitung zum Kopf Desorptionskolonne 50
- 25: Zuführleitung zum Kopf Desorptionskolonne 50
- 26: Zuführleitung zum Kopf Desorptionskolonne 50
- 27: Zuführleitung zum Kopf Desorptionskolonne 50
- 28: Kopfauslaßleitung Desorber 50
- 29: Pfeil H₂S-reiches Claus-Gas
- 41: Absorptionskolonne
- 42: Recyclegas-Flashbehälter
- 43: Recyclegas-Verdichter
- 44: Wärmetauscher
- 46: Wärmetausche
- 47: Hochdruck-Flashbehälter
- 48: Kühler
- 49: Zweite Absorptionskolonne
- 50: Desorptionskclonne
- 52: Wärmetauscher
- 54: Wärmetauscher
- 55: Flashbehälters
- 56: Niederdruck-Flashbehälter
- 58: Verdichter
- 60: Kühler

## Patentansprüche

1. Verfahren zur selektiven Entfernung von Schwefelwasserstoffen, organischen Schwefelkomponenten und CO₂ aus Rohgasen, wie z.B. Erdgas oder Synthesegas, unter Verwendung einer ersten Absorptionsstufe (41) und einer zweiten Absorptionsstufe (49) zur Abtrennung von im wesentlichen reinem CO₂ und der Verwendung einer Desorptionsstufe (50) zur Gewinnung eines schwefelwasserstoffreichen Gases, wobei das regenerierte Absorbens aus der Desorptionsstufe (50) den beiden Absorptionsstufen (41,49) wieder zugeleitet wird, wobei als Absorbens ein chemisch nicht aktives Lösungsmittel eingesetzt wird, und
das von der ersten Absorptionsstufe (41) kommende (mit Schwefelwasserstoff, organischen Schwefelverbindungen und CO₂ angereicherte) Absorptionsmittel mit der von der Desorptionsstufe (50) kommenden heißen, regenerierten Lösung (12) in einem Wärmetauscher (44) vorgewärmt und dann in einem Hochdruck-Flashbehälter (47) entspannt und dann der zweiten Absorptionsstufe (49) zugeführt, und
das Absorptionsmittel aus der zweiten Absorptionsstufe (49) in die Desorptionsstufe (50) zurückgeführt (26/27) wird,
**dadurch gekennzeichnet,**
- **daß** das von der Absorptionsstufe (41) kommende Absorptionsmittel bei einem erhöhten Druck, der sich zwischen dem Druck der Absorptionskolonne (41) und dem Druck der Desorptionskolonne (50) befindet, in dem gewählten höheren Druck in dem Hochdruck-Flashbehälter (47) entspannt wird,
- **daß** der bei dem erhöhten Druck freiwerdende Gasstrom in einem Kondensator (48) gekühlt und dann der zweiten Absorptionsstufe (49) zugeführt wird, in der die Schwefelkomponenten mittels des (eingangs erwähnten) Teilstromes des von der Desorptionsstufe (50) kommenden regenerierten Absorptionmittels (15,16,17) vollständig entfernt werden, und
- **daß** nach der zweiten Absorptionsstufe (49) eine Flashstufe (55) vorgesehen ist, in welcher das beladene Absorbens aus der zweiten Absorptionsstufe entspannt wird und das frei werdende Flashgas (19), welches im wesentlichen CO₂ und Anteile an H₂S enthält, in eine mindestens indirekt der zweiten Absorberstufe zuführende Leitung und das Absorbens (26) in die Desorptionstufe geleitet wird.

2. Verfahren nach Anspruch 1,
**dadurch gekennzeichnet,**
**daß** das beladene Absorbens (18) nach der zweiten Absorptionsstufe (49) und vor dem Eintritt in die Desorptionsstufe erwärmt wird, wobei die Erwärmung im indirekten Wärmetausch (52) mit dem von der Desorptionsstufe kommenden Absorbensstrom (15) erfolgt.

3. Verfahren nach Anspruch 1 oder 2,
**dadurch gekennzeichnet,**
**daß** direkt vor der zweiten Absorptionsstufe (49) eine FlashStufe (55) angeordnet ist, in welcher das aus der Kondensationsstufe (48) kommende Absorbens (9) entspannt wird und das frei werdende Wertgas, welches im wesentlichen Kohlenwasserstoffe, H₂S und CO₂ enthält, in die erste Absorptionsstufe (41) zurückgeführt wird.

4. Verfahren nach Anspruch 1 oder 2-3,
**dadurch gekennzeichnet,**
**daß** die Absorption bei einem Betriebsdruck von 10 bis 150 bar erfolgt.

5. Verfahren nach Anspruch 1 oder 3-4,
**dadurch gekennzeichnet,**
**daß** eine Temperaturerhöhung des vom Absorber kommenden, angereicherten Absorptionsmittel auf 50 bis 200°C vorgenommen wird.

6. Verfahren nach Anspruch 1,
**dadurch gekennzeichnet,**
**daß** die den Hochdruck-Flashbehälter (47) verlassende angereicherte Absorptionslösung in einem Niederdruckflash (56) entspannt wird, wobei das Flashgas mittels eines gemeinsamen Verdichters (58) der zweiten Absorptionskolonne (49) zusammen mit dem Flashgas aus der Flashstufe (55) zugeführt wird und wobei die den Niederdruckflash (56) verlassende Absorptionslösung auf den Kopf der Desorptionskolonne geführt wird.

## Claims

1. A method of selective removal of hydrogen sulphides, organic sulphur components and CO₂ from crude gases such as for example natural gas or synthesis gas, using a first absorption stage (41) and a second absorption stage (49) for the separation of substantially pure CO₂ and using a desorption stage (50) for obtaining a hydrogen sulphide-rich gas, wherein the regenerated absorbent is passed from the desorption stage (50) to the two absorption stages (41, 49) again, wherein the absorbent used is a chemically non-active solvent, and
the absorption agent coming from the first absorption stage (41) (and enriched with hydrogen sulphide, organic sulphur compounds and CO₂) is preheated with the hot regenerated solution (12) coming from the desorption stage (50) in a heat exchanger (44) and is then allowed to expand in a high pressure flash container (47) and then fed to the second absorption stage (49), and
the absorption agent is fed back (26/27) from the second absorption stage (49) into the desorption stage (50),
**characterised in that**
- the absorption agent coming from the absorption stage (41) is allowed to expand at an elevated pressure which is between the pressure of the absorption column (41) and the pressure of the desorption column (50), at the selected higher pressure in the high pressure flash container (47),
- the gas flow which is released at the elevated pressure is cooled in a condenser (48) and then fed to the second absorption stage (49) in which the sulphur components are completely removed by means of the partial flow (mentioned in the opening part) of the regenerated absorption agent (15, 16, 17) coming from the desorption stage (50), and
- after the second absorption stage (49) there is provided a flash stage (55) in which the charged absorbent from the second absorption stage is allowed to expand and the flash gas (19) which comes free and which contains substantially CO₂ and proportions of H₂S is passed into a conduit leading at least indirectly to the second absorber stage and the absorbent (26) is passed into the desorption stage.

2. A method according to claim 1 **characterised in that** the charged absorbent (18) is heated after the second absorption stage (49) and before passing into the desorption stage, wherein heating is effected in indirect heat exchange relationship (52) with the absorbent flow (15) coming from the desorption stage.

3. A method according to claim 1 or claim 2 **characterised in that** a flash stage (55) is arranged directly upstream of the second absorption stage (49), in which flash stage the absorbent (9) coming from the condensation stage (48) is allowed to expand and the valuable gas which comes free and which substantially contains hydrogen sulphides, H₂ and CO₂ is passed back into the first absorption stage (41).

4. A method according to claim 1 or claims 2 - 3 **characterised in that** absorption is effected at an operating pressure of 10 to 150 bars.

5. A method according to claim 1 or claims 3 - 4 **characterised in that** a temperature increase in the enriched absorption agent coming from the absorber to 50 to 100°C is effected.

6. A method according to claim 1 **characterised in that** the enriched absorption solution leaving the high pressure flash container (47) is allowed to expand in a low pressure flash (56), wherein the flash gas is passed together with the flash gas from the flash stage (55) to the second absorption column (49) by means of a common compressor (58) and wherein the absorption solution leaving the low pressure flash (56) is passed to the head of the desorption column.

## Revendications

1. Procédé pour l'élimination sélective de sulfure d'hydrogène, de composants organiques soufrés et de CO₂ à partir de gaz bruts, tels que par exemple le gaz naturel ou le gaz de synthèse, utilisant une première étape d'absorption (41) et une seconde étape d'absorption (49) pour la séparation de CO₂ sensiblement pur et utilisant une étape de désorption (50) pour l'obtention d'un gaz enrichi en sulfure d'hydrogène, dans lequel l'agent absorbant régénéré provenant de l'étape de désorption (50) est recyclé vers les deux étapes d'absorption (41, 49), l'agent absorbant étant un solvant chimiquement inerte, et
dans lequel l'agent absorbant provenant de la première étape d'absorption (41) (contenant du sulfure d'hydrogène, des composés organiques soufrés et enrichi en CO₂) est préchauffé, avec la solution régénérée chaude (12) provenant de l'étape de désorption (50), dans un échangeur de chaleur (44), et ensuite détendu dans un récipient d'évaporation éclair haute pression (47) puis amené vers la seconde étape d'absorption (49), et
dans lequel l'agent absorbant provenant de la seconde étape d'absorption (49) est recyclé (26/27) vers l'étape de désorption (50),
**caractérisé en ce que**
- l'agent absorbant, provenant de l'étape d'absorption (41), est détendu à une pression élevée, intermédiaire entre la pression de la colonne d'absorption (41) et la pression de la colonne de désorption (50), à la pression supérieure choisie dans le récipient d'évaporation éclair haute pression (47),
- le flux gazeux libéré à pression élevée est refroidi dans un condensateur (48) et est ensuite amené vers la seconde étape d'absorption (49) dans laquelle les composants soufrés sont entièrement éliminés au moyen du flux partiel (mentionné ci-avant) d'agent absorbant (15, 16, 17) régénéré provenant de l'étape de désorption (50), et
- après la seconde étape d'absorption (49), il est prévu une étape d'évaporation éclair (55) dans laquelle l'agent absorbant chargé, provenant de la seconde étape d'absorption, est détendu, et le gaz d'évaporation éclair (19) libéré, qui contient essentiellement du CO₂ et des fractions de H₂S, est amené dans une conduite menant au moins indirectement à la seconde étape d'absorption et l'agent absorbant (26) est amené vers l'étape de désorption.

2. Procédé selon la revendication 1, **caractérisé en ce que** l'agent absorbant chargé (18) est chauffé, après la seconde étape d'absorption (49) et avant l'entrée dans l'étape de désorption, le réchauffage s'effectuant par échange de chaleur indirect (52), avec le flux d'agent absorbant (15) provenant de l'étape de désorption.

3. Procédé selon la revendication 1 ou 2, **caractérisé en ce qu'**une étape d'évaporation éclair (55) est prévue directement en amont de la seconde étape d'absorption (49), étape dans laquelle l'agent absorbant (9) provenant de l'étape de condensation (48) est détendu et le gaz libéré, contenant essentiellement des hydrocarbures, du H₂S et du CO₂, est recyclé vers la première étape d'absorption (41).

4. Procédé selon la revendication 1 ou 2 à 3, **caractérisé en ce que** l'absorption s'effectue à une pression de fonctionnement de 10 à 150 bars.

5. Procédé selon la revendication 1 ou 3 à 4, **caractérisé en ce qu'**on augmente la température de l'agent absorbant enrichi, provenant de l'absorbeur, jusqu'à 50 - 200°C.

6. Procédé selon la revendication 1, **caractérisé en ce que** la solution d'absorption enrichie quittant le récipient d'évaporation éclair à haute pression (47) est détendue dans un récipient d'évaporation éclair basse pression (56), le gaz d'évaporation éclair étant amené au moyen d'un condensateur commun (58) vers la deuxième colonne d'absorption (49), conjointement avec le gaz d'évaporation éclair provenant de l'étape d'évaporation éclair (55) et la solution d'absorption quittant le récipient d'évaporation éclair basse pression (56) est alors amenée jusqu'à la tête de la colonne de désorption.
